Europäisches Patentamt

European Patent Office

Office européen des brevets

(19)

(11) **EP 0 943 921 A1**

(12) **EUROPÄISCHE PATENTANMELDUNG**

(43) Veröffentlichungstag:
22.09.1999 Patentblatt 1999/38

(51) Int. Cl.$^6$: **G01P 3/80**, G01P 3/50,
G06G 7/19

(21) Anmeldenummer: 99104592.3

(22) Anmeldetag: 08.03.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 19.03.1998 DE 19812070

(71) Anmelder:
SIEMENS AKTIENGESELLSCHAFT
80333 München (DE)

(72) Erfinder:
Jungkunz, Clemens, Dipl.-Ing.
91056 Erlangen (DE)

(54) **Verfahren und Vorrichtung zur näherungsweisen Geschwindigkeitsbestimmung bei einem spurgeführten Fahrzeug**

(57) Das Verfahren bzw. die Vorrichtung betrifft die Bestimmung einer näherungsweisen Geschwindigkeit eines schienengebundenen Fahrzeuges.

Zwei Signale, welche geometrische Eigenschaften bzw. Unebenheiten der Gleisstrecke wiedergegeben, werden an zwei Meßorten, die einen Abstand L aufweisen, aufgenommen. Die Sensoren sind beispielsweise Beschleunigungssensoren und erzeugen zwei Signale S1 und S2.

Ein geschätzter Geschwindigkeitswert wird durch eine Laufzeitkorrelation an seinen tatsächlichen Wert angenähert.

Hierzu wird ein verzögertes Signal S0 dadurch erzeugt, daß das Signal S1 wird mit einer Zeitverzögerung versehen wird, welche aus dem aktuell geschätzten Geschwindigkeitswert abgeleitet wird.

Die Differenz S2 - S0 wird mit der Abteilung von S2 + S0 multipliziert und ergibt ein Regelsignal, mit dem ein neuer Wert für die geschätzte Geschwindigkeit bestimmt wird.

FIG 1

EP 0 943 921 A1

**Beschreibung**

Die Erfindung betrifft ein Verfahren und eine Vorrichtung zur näherungsweisen Geschwindigkeitsbestimmung bei einem spurgeführten Fahrzeug.

Bei Schienenfahrzeugen stellt die aktuelle Geschwindigkeit eine wichtige Größe dar, die z. B. für die Neigung eines Wagenkastens gegenüber seinen Fahrwerken oder für die Traktions- und/oder Bremssteuerung möglichst genau bekannt sein muß. Die Geschwindigkeit wird üblicherweise aus der Achs- bzw. Motordrehzahl von nicht angetriebenen und womöglich ungebremsten Achsen bestimmt. Bei modernen (Trieb-)Zügen sieht man sich jedoch in zunehmendem Maße mit der Situation konfrontiert, daß alle Achsen gebremst werden und zumindest der größte Teil der Achsen angetrieben wird, um so die Traktions- und Bremskräfte besser übertragen zu können. Hierdurch kommt es durch die bei Beschleunigungs- und Bremsvorgängen im allgemeinen auftretenden Gleit- und Schleudervorgänge zwischen Rad und Schiene zu der Problematik, daß die an der "Meßachse" ermittelte Geschwindigkeit bei kritischen Witterungsverhältnissen (Schienen betaut oder überfroren) über längere Zeit deutlich von der tatsächlichen Geschwindigkeit des Zuges (relativ zum Erdboden) abweichen kann. Insbesondere für Neigezüge können derartige Abweichungen nicht toleriert werden, da aus dem Geschwindigkeitssignal wichtige, die Neigeregelung beeinflussende Signale (Sollwerte) generiert werden. Nach dem gegenwärtigen Stand der Technik werden zwar, z. B. in den Traktionssteuergeräten, Plausibilitätsprüfungen durchgeführt, die sicherstellen sollen, daß die Änderung der Geschwindigkeit (Beschleunigung) bestimmte Grenzwerte nicht übersteigt. Die auf diese Art gemessene Geschwindigkeit kann in den vorstehend genannten Problemfällen nicht immer in der gewünschten Güte (Genauigkeit) gewährleistet werden.

Weiterhin sind Verfahren bekannt, die z. B. mittels Radar unter Nutzung des Doppler-Effekts, eine Geschwindigkeitsermittlung zulassen. Die hierfür benötigten Vorrichtungen sind einerseits relativ teuer und weisen andererseits bei ungünstigen Boden- bzw. Witterungsverhältnissen noch erhebliche technische Probleme auf.

Aufgabe der vorliegenden Erfindung ist es deshalb, ein Verfahren und eine Vorrichtung zu schaffen, die auch unter ungünstigen Witterungsverhältnissen bei allen fahrdynamischen Zuständen des spurgeführten Fahrzeugs eine relativ genaue Geschwindigkeitsbestimmung ermöglicht.

Die Aufgabe wird erfindungsgemäß durch ein Verfahren nach Anspruch 1 sowie durch eine Vorrichtung nach Anspruch 14 gelöst. Vorteilhafte Ausgestaltungen der Erfindung sind jeweils Gegenstand von weiteren Ansprüchen.

Das erfindungsgemäße Verfahren umfaßt folgende Verfahrensschritte:

- Messung wenigstens eines ersten Signals $S_1$ und wenigstens eines zweiten Signals $S_2$, welche identische geometrische Eigenschaften der Gleisstrecke zumindest näherungsweise beschreiben, an wenigstens zwei relativ zueinander beweglichen und im Abstand L voneinander entfernten Meßorten im oder am Fahrzeug,

- Bildung eines zeitverzögerten Signals $S_0$ aus dem ersten Signal $S_1$, wobei die Zeitverzögerung t durch das Integral

$$L = \int_0^t V_K d\tau$$

über dem korrigierten Geschwindigkeitssignal $V_k$ unter Berücksichtigung des Abstandes L der Meßorte gegeben ist,

- Bildung eines Subtraktionssignals $S_S = k_1 \cdot S_2 - k_2 \cdot S_0$ aus der Differenz des mit einem Faktor $k_1$ gewichteten zweiten Signals $S_2$ und des mit einem Faktor $k_2$ gewichteten zeitverzögerten Signals $S_0$ sowie Bildung eines Additionssignals $S_A = k_3 \cdot S_2 + k_4 \cdot S_0$ aus der Summe des mit einem Faktor $k_3$ gewichteten zweiten Signals $S_2$ und des mit einem Faktor $k_4$ gewichteten zeitverzögerten Signals $S_0$, wobei die Faktoren $k_1$ bis $k_4$ reelle Koeffizienten sind, bzw. Bildung von Signalen, die zum Subtraktionssignal $S_S$ und/oder zum Additionssignal $S_A$ äquivalent sind,

- Bildung eines Regelsignals $\Delta S$ aus dem Additionssignal $S_A$ und dem Subtraktionssignal $S_S$ bzw. aus daraus abgeleiteten Größen, oder aus dazu äquivalenten Signalen,

- Bildung eines Geschwindigkeitskorrektursignals $\Delta V$ aus dem Regelsignal $\Delta S$,

- Bestimmung des korrigierten Geschwindigkeitssignals $V_K = V_0 + \Delta V$ durch Addition des Geschwindigkeitskorrektursignals $\Delta V$ zu einem vorgebbaren Geschwindigkeitssignal $V_0$.

Die erfindungsgemäße Vorrichtung umfaßt folgende Merkmale:

- Mindestens eine Meßeinrichtung mit wenigstens einem ersten Sensor zur Messung wenigstens eines ersten Signals $S_1$ und mit wenigstens einem zweiten Sensor zur Messung wenigstens eines zweiten Signals $S_2$, wobei die Signale $S_1$, $S_2$ identische geometrische Eigenschaften der Gleisstrecke zumindest näherungsweise beschreiben und die wenigstens zwei Sensoren an wenigstens zwei relativ zueinander beweglichen und im Abstand L voneinander entfernten Meßorten im oder am Fahrzeug angeordnet sind,

- mindestens ein Zeitverzögerungsglied zur Bildung eines zeitverzögerten Signals $S_0$ aus dem ersten

Signal $S_1$, wobei die Zeitverzögerung t durch das Integral

$$L = \int_{0}^{t} V_K d\tau$$

über dem korrigierten Geschwindigkeitssignal $V_K$ unter Berücksichtigung des Abstandes L der Meßorte gegeben ist,

- mindestens ein Subtrahierer 41 zur Bildung eines Subtraktionssignals $S_S = k_1 \cdot S_2 - k_2 \cdot S_0$ aus der Differenz des mit einem Faktor $k_1$ gewichteten zweiten Signals $S_2$ und des mit einem Faktor $k_2$ gewichteten zeitverzögerten Signals $S_0$ sowie mindestens einen Addierer 42 zur Bildung eines Additionssignals $S_A = k_3 \cdot S_2 + k_4 \cdot S_0$ aus der Summe des mit einem Faktor $k_3$ gewichteten zweiten Signals $S_2$ und des mit einem Faktor $k_4$ gewichteten zeitverzögerten Signals $S_0$, wobei die Faktoren $k_1$ bis $k_4$ reelle Koeffizienten sind, bzw. Bildung von Signalen, die zum Subtraktionssignal $S_S$ und/oder zum Additionssignal $S_A$ äquivalent sind,
- wenigstens eine Recheneinheit 47 zur Bildung eines Regelsignals $\Delta S$ aus dem Additionssignal $S_A$ und dem Subtraktionssignal $S_S$ bzw. aus daraus abgeleiteten Größen, oder aus dazu äquivalenten Signalen,
- wenigstens eine Regeleinrichtung zur Bildung eines Geschwindigkeitskorrektursignals $\Delta V$ aus dem Regelsignal $\Delta S$,
- wenigstens ein Addierer zur Bestimmung des korrigierten Geschwindigkeitssignals $V_K = V_0 + \Delta V$ durch Addition des Geschwindigkeitskorrektursignals $\Delta V$ zu einem vorgebbaren Geschwindigkeitssignal $V_0$.

Die erfindungsgemäße Lösung beruht auf der Erkenntnis, daß durch Messung von wenigstens zwei Signalen an wenigstens zwei voneinander entfernten Meßorten die Geschwindigkeit ermittelt werden kann. Hierzu weist die erfindungsgemäße Vorrichtung wenigstens zwei Sensoren auf, die an unterschiedlichen Fahrzeugteilen im Abstand L zueinander angeordnet sind. Aus der Differenz zwischen den gemessenen Gleiseigenschaften bezogen auf dieselbe Gleisstelle kann die Geschwindigkeit ermittelt werden.

Bei dem Abstand L handelt es sich vorzugsweise um den Längsabstand. Es ist im Rahmen der Erfindung jedoch auch möglich, andere Abstände zu wählen und diese dann in einen entsprechenden Längsabstand umzurechnen.

Der Begriff "unterschiedliche Fahrzeugteile" umfaßt z. B. Wagenkästen und Fahrwerke (insbesondere Drehgestelle). So kann der erste Sensor im ersten Wagenkasten und der zweite Sensor im zweiten Wagenkasten angeordnet sein. Weiterhin ist z. B. auch eine Anordnung von zwei Sensoren in bzw. an einem einzigen Wagen möglich. Der erste Sensor ist dann beispielsweise in einem Fahrwerk und der zweite Sensor im Wagenkasten angeordnet. Auch die Anordnung jeweils eines Sensors in jedem der beiden Fahrwerke eines Wagens ist möglich.

Die Zeitverzögerung t aus dem Integral

$$L = \int_{0}^{t} V_K d\tau$$

wird üblicherweise nicht expizit ermittelt, sondern das erste Signal wird mittels eines geschwindigkeitsgesteuerten Verzögerungsglieds verzögert. Damit ist auch bei einem nicht konstanten korrigierten Geschwindigkeitssignal $V_K$ eine genaue (weil integrierende) Signalverzögerung gewährleistet. Für den Grenzfall eines konstanten korrigierten Geschwindigkeitssignals $V_K$ ergibt sich für die Zeitverzögerung

$$t = \frac{L}{V_K},$$

wobei L der Abstand der Meßorte ist und mit $V_K$ das korrigierte Geschwindigkeitssignal bezeichnet ist.

Die für das Verfahren nach Anspruch 1 benötigten Signale $S_1$ und $S_2$ können bei Neigezügen beispielsweise durch sogenannte Inertialsensoren ermittelt werden. Diese Sensoren dienen zur Messung des Istwertes der Absolutneigung des Wagenkastens (auch als Rollwinkel bezeichnet) gegenüber der als Inertialsystem betrachteten Erde und liefern darüber hinaus Informationen, die die Gleisgeometrie beschreiben (Gleiskrümmung, Drehgestell- und/oder Gleisneigewinkel). Eine derartige Inertialsensorik zur Messung des Absolut-Rollwinkels ist z. B. in der EP 0 770 233 B1 beschrieben.

Die bekannten Inertialsensoren sind sehr empfindlich, so daß bereits geringe Gleisirregularitäten (Störungen im Gleisverlauf) und nicht erst eine Gleisüberhöhung oder eine Gleiskrümmung zuverlässig erfaßt werden. Da auch geringe Gleisirregularitäten zu unerwünschten mechanischen Anregungen bei den Fahrwerken und den Wagenkästen führen, kann auch auf geraden Strecken die Momentangeschwindigkeit zuverlässig ermittelt werden.

Das Regelsignal $\Delta S$ wird gemäß einer Ausgestaltung nach Anspruch 2 durch Multiplikation des nach der Zeit abgeleiteten Additionssignals $\frac{d}{dt}S_A$ mit dem Subtraktionssignal $S_S$ gebildet.

Eine bevorzugte Ausführungsform der Erfindung ist in der Zeichnung schematisch dargestellt. Es zeigen:

FIG 1        eine Ausführungsform der erfindungsgemäßen Vorrichtung, mit der ein erfindungsgemäßes Verfahren zur näherungsweisen Geschwindigkeitsbestimmung durchführbar ist,

FIG 2 bis 6    jeweils der zeitliche Verlauf der bei einer Ausführungsform des erfindungsgemäßen Verfahrens gemessenen Signale sowie der nach diesem Verfahren gebildeten Signale.

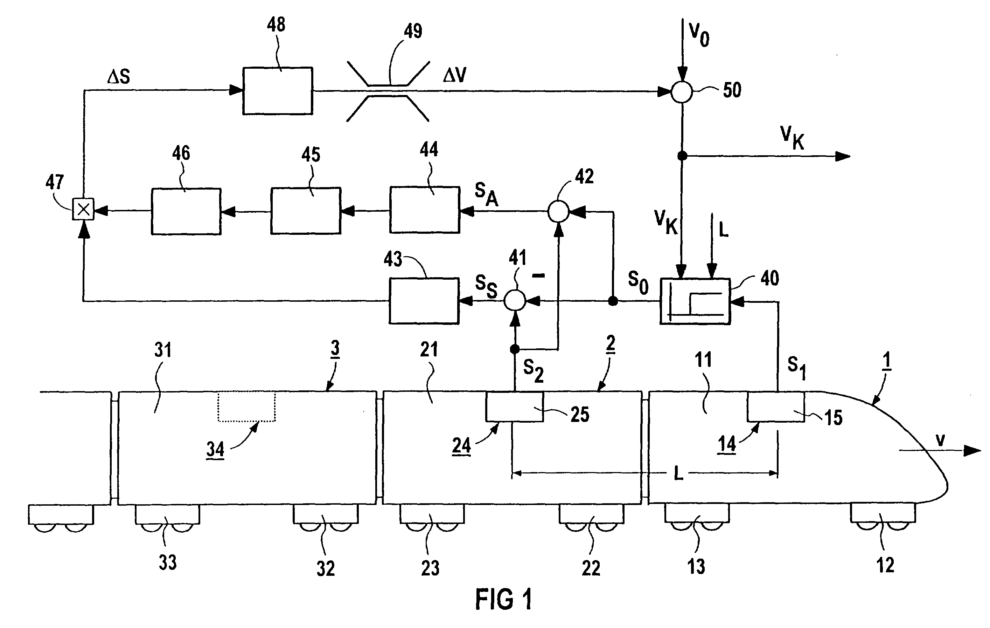

In FIG 1 ist ein Schienenfahrzeug dargestellt, dessen führender Wagen mit 1 und dessen nachfolgende Wagen mit 2 und 3 bezeichnet sind. Jeder Wagen 1 bis 3 umfaßt einen Wagenkasten 11 bzw. 21 bzw. 31. Jeder Wagenkasten 11, 21 und 31 ist jeweils über zwei Drehgestelle 12 und 13 bzw. 22 und 23 bzw. 32 und 33 sowie über nicht dargestellte Luftfedern federnd abgestützt.

Der mit "v" bezeichnete Pfeil gibt die Fahrgeschwindigkeit als vektorielle Größe, also mit Betrag und Fahrtrichtung, an. Im gezeigten Fall ist dies die Vorwärtsfahrt.

Im Wagenkasten 11 des führenden Wagens 1 ist eine Meßeinrichtung 14 mit einem Sensor 15 angeordnet. Desgleichen ist im Wagenkasten 21 des nachfolgenden Wagens 2 eine Meßeinrichtung 24 mit einem Sensor 25 angeordnet. Im Wagenkasten 31 des in Fahrtrichtung dritten Wagens 3 ist eine Meßeinrichtung 34 angeordnet. Die Meßeinrichtung 34 braucht nicht unbedingt vorgesehen sein und ist deshalb gestrichelt dargestellt.

Der Sensor 15 ist also im Wagenkasten 11 und der Sensor 25 im Wagenkasten 21 angeordnet. Damit sind beide Sensoren 15 und 25 an zwei relativ zueinander beweglichen und in einem Abstand L voneinander entfernten Meßorten angeordnet.

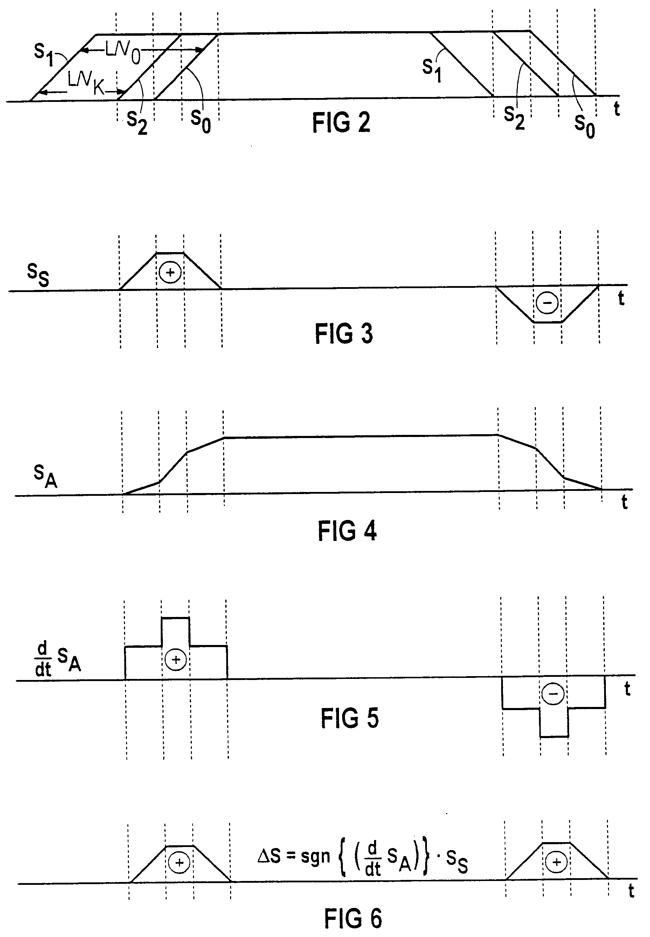

Durch den Sensor 15 wird ein erstes Signal $S_1$ gemessen, wohingegen durch den Sensor 25 ein zweites Signal $S_2$ gemessen wird. Beide Signale $S_1$ und $S_2$ beschreiben die Gleisgeometrie zumindest näherungsweise. Das erste Signal $S_1$ wird zeitlich vor dem zweiten Signal $S_2$ gemessen (Vorwärtsfahrt). In FIG 2 ist dies daran zu erkennen, daß das erste Signal $S_1$ vor dem zweiten Signal $S_2$ ansteigt und auch wieder vor dem zweiten Signal $S_2$ abfällt. Beide Signale $S_1$ und $S_2$ weisen - zumindest für den Fall konstanter Geschwindigkeit - die gleiche Signalbreite auf, da sie an derselben Gleisstelle gemessen wurden.

Im folgenden wird davon ausgegangen, daß das tatsächliche Geschwindigkeitssignal V, das die tatsächliche Geschwindigkeit v repräsentiert, größer ist als das vorgebbare Geschwindigkeitssignal $V_0$, das die vorgebbare Geschwindigkeit $v_0$ repräsentiert. Die vorgebbare Geschwindigkeit $v_0$ ist also kleiner als die tatsächliche Geschwindigkeit v.

Das erste Signal $S_1$ wird - zusammen mit dem Längsabstand L der beiden Sensoren 15 und 25 - einem Zeitverzögerungsglied 40 zugeführt, in dem aus dem ersten Signal $S_1$ ein zeitverzögertes Signal $S_0$ gebildet wird, das - zumindest für den Fall konstanter Geschwindigkeit - dieselbe Signalbreite wie die Signale $S_1$ und $S_2$ aufweist. Die Zeitverzögerung t ist hierbei im allgemeinsten Fall durch das Integral

$$L = \int_0^t V_K \, d\tau$$

über dem

korrigierten Geschwindigkeitssignal $V_K$ unter Berücksichtigung des Abstandes L der beiden Sensoren 15 und 25 zueinander gegeben. Im vorliegenden Fall werden jedoch konstante Geschwindigkeiten vorausgesetzt, und damit auch ein konstantes korrigiertes Geschwindigkeitssignal $V_K$, so daß sich die Zeitverzögerung t zwischen den Signalen $S_1$ und $S_2$ zu

$$t = \frac{L}{V_K}$$

ergibt, wobei L der Abstand der Meßorte ist und $V_K$ das korrigierte Geschwindigkeitssignal darstellt.

Analog ergibt sich die Zeitverzögerung t zwischen dem ersten Signal $S_1$ und dem zeitverzögerten Signal $S_0$ zu

$$t = \frac{L}{V_0},$$

wobei mit L der Abstand der Meßorte und mit $V_0$ das vorgebbare Geschwindigkeitssignal bezeichnet ist.

Das zeitverzögerte Signal $S_0$ wird gleichzeitig einem Subtrahierer 41 und einem Addierer 42 zugeführt. Weiterhin erhalten der Subtrahierer 41 und der Addierer 42 gleichzeitig das zweite Signal $S_2$.

Im vorliegenden Ausführungsbeispiel sind das zweite Signal $S_2$ und das zeitverzögerte Signal $S_0$ mit dem Faktor eins gewichtet ($k_1=k_2=k_3=k_4=1$).

Im Subtrahierer 41 wird somit ein Subtraktionssignal $S_S=S_2-S_0$ aus der Differenz des zweiten Signals $S_2$ und des zeitverzögerten Signals $S_0$ gebildet. Der zeitliche Verlauf des Subtraktionssignals $S_S$ ist in FIG 3 dargestellt.

Da das zeitverzögerte Signal $S_0$ zeitlich nach dem zweiten Signal $S_2$ liegt (siehe FIG 2), entsteht beim Signalanstieg ein positives Subtraktionssignal $S_S$ und beim Signalabfall ein negatives Subtraktionssignal $S_S$ (siehe FIG 3).

Wie aus FIG 3 weiterhin ersichtlich ist, bringt das Subtraktionssignal $S_S$ allein kein hinreichendes Kriterium zur Geschwindigkeitskorrektur (unterschiedliches Vorzeichen bei Signalanstieg und Signalabfall). Um ein hinreichendes Kriterium zur Geschwindigkeitskorrektur zu erhalten, kann beispielsweise die zeitliche Ableitung des Additionssignals $S_A$ hinzugenommen werden, wodurch dann eine eindeutige Korrekturrichtung gegeben ist.

Anstelle der zeitlichen Ableitung $\frac{d}{dt}S_A$ und der Multiplikation sgn{( $\frac{d}{dt}S_A$ )}·$S_S$ können auch andere, ihnen gegenüber vorzeichenerhaltende Operationen aus Subtraktionssignal $S_S$ und Additionssignal $S_A$ - wie z. B. statt des einfachen Produkts ein Produkt, dessen Faktoren ungeradzahlige Exponenten aufweisen - gewählt werden.

Im Addierer 42 wird (wegen $k_3=k_4=1$).ein Additionssignal $S_A=S_2+S_0$ aus der Summe des zweiten Signals $S_2$ und des zeitverzögerten Signals $S_0$ gebildet. Den zeitliche Verlauf des Additionssignals $S_A$ zeigt FIG 4.

Sowohl das Subtraktionssignal $S_S$ als auch das Additionssignal $S_A$ wird jeweils einem Filter 43 bzw. 44 zugeführt. Das im Filter 44 gefilterte Additionssignal $S_A$ wird auf einen Differenzierer 45 gegeben, der die erste zeitliche Ableitung $\frac{d}{dt}$ des Additionssignals $S_A$ bildet.

Anschließend wird im dargestellten Ausführungsbeispiel das nach der Zeit abgeleitete Additionssignal $\frac{d}{dt}S_A$, dessen zeitlicher Verlauf in FIG 5 gezeigt ist, in einem Vorzeichendetektor 46 einer Vorzeichenauswertung unterzogen. Durch die im dargestellten Ausführungsbeispiel vorgenommene Vorzeichenauswertung des Additionssignals $S_A$ wird in vorteilhafter Weise erreicht, daß kein progressiver Einfluß auf das Regelsignal $\Delta S$ entsteht. Es findet also keine Bewertung des Additionssignals $S_A$ mit dem Anstieg $\frac{d}{dt}$ statt, sondern es wird lediglich die Richtung (Vorzeichen) des nach der Zeit abgeleiteten Additionssignals $\frac{d}{dt}S_A$ für die nachfolgend beschriebene Bildung des Regelsignals $\Delta S$ herangezogen.

Das vorzeichenausgewertete, differenzierte und gefilterte Additionssignal sgn{( $\frac{d}{dt}S_A$ )} wird anschließend einem Multiplizierer 47 zugeführt. Dem Multiplizierer 47 wird gleichzeitig das gefilterte Subtraktionssignal $S_S$ zugeführt.

Im Multiplizierer 47 wird durch Multiplikation des vorzeichenausgewerteten nach der Zeit abgeleiteten Additionssignals sgn{( $\frac{d}{dt}S_A$ )} mit dem Subtraktionssignal $S_S$ ein Regelsignal

$$\Delta S=sgn\{(\frac{d}{dt}S_A)\}·S_S$$

gebildet. Dieses Regelsignal $\Delta S$, dessen zeitlicher Verlauf in FIG 6 dargestellt ist, wird einer Regeleinrichtung 48 zur Bildung eines Geschwindigkeitskorrektursignals $\Delta V$ zugeführt.

Im dargestellen Ausführungsbeispiel wird das in der Regeleinrichtung 48 gebildete Geschwindigkeitskorrektursignal $\Delta V$ einem Begrenzungselement 49 zugeführt und auf einen Addierer 50 gegeben.

Im Addierer 50 wird durch Addition des Geschwindigkeitskorrektursignals $\Delta V$ mit einem vorgebbaren Geschwindigkeitssignal $V_0$ ein korrigiertes Geschwindigkeitssignal $V_K=V_0+\Delta V$ ermittelt.

Zu Beginn des Verfahrens ist das Geschwindigkeitskorrektursignal $\Delta V$ gleich Null und das korrigierte Geschwindigkeitssignal $V_K$ ist gleich dem vorgebbaren Geschwindigkeitssignal $V_0$. Während des Verfahrens wird das Geschwindigkeitskorrektursignal $\Delta V$ in der Regeleinrichtung 48 zumindest so lange gebildet, bis die dem korrigierten Geschwindigkeitssignal $V_K$ entsprechende korrigierte Geschwindigkeit $V_K$ zumindest annähernd gleich der tatsächlichen Geschwindigkeit v ist.

Im Rahmen der Erfindung kann das vorgebbare Geschwindigkeitssignal $V_0$ zu Beginn des Verfahrens entweder gleich Null gesetzt werden oder als Schätzwert ungleich Null vorgegeben werden. Gemäß einer weiteren Alternative kann das vorgebbare Geschwindigkeitssignal $V_0$ zu einem vorgebbaren Zeitpunkt bekannt sein. Unabhängig davon, ob das vorgebbare Geschwindigkeitssignal $V_0$ zu Beginn des Verfahrens gleich Null gesetzt wird oder als Schätzwert ungleich Null vorgegeben wird oder bekannt ist, wird das vorgebbare Geschwindigkeitssignal $V_0$ vorzugsweise laufend zur Verfügung gestellt.

Das im Addierer 50 gebildete korrigierte Geschwindigkeitssignal $V_K$ wird dem Verzögerungsglied 40 zugeführt. Weiterhin kann das korrigierte Geschwindigkeitssignal $V_K$ als Stellgröße einer Neigungsregelung für die Wagenkästen 11, 21 und 31 zugeführt werden.

Zu Ende des Verfahrens oder nach gewisser Zeit ist das Regelsignal $\Delta S$ gleich Null oder es hat (sehr) kleine Werte erreicht, so daß ein Optimum bezüglich des Geschwindigkeitskorrektursignals $\Delta V$ bei der Geschwindigkeitsschätzung erreicht wurde. Vorzugsweise jedoch erfolgt der Ablauf des Verfahrens permanent während des Betriebs des Zuges, so daß eine ständige Verbesserung des Geschwindigkeitsmeßwerts erzielt wird.

**Patentansprüche**

1. Verfahren zur näherungsweisen Geschwindigkeitsbestimmung bei einem spurgeführten Fahrzeug mit mindestens einem Wagen, dessen Wagenkasten auf Fahrwerken mit wenigstens einem Radpaar sitzt, wobei das Verfahren folgende Merkmale umfaßt:

- Messung wenigstens eines ersten Signals ($S_1$) und wenigstens eines zweiten Signals ($S_2$), welche identische geometrische Eigenschaften der Gleisstrecke zumindest näherungsweise beschreiben, an wenigstens zwei relativ zueinander beweglichen und im Abstand (L) voneinander entfernten Meßorten im oder am Fahrzeug,

- Bildung eines zeitverzögerten Signals ($S_0$) aus dem ersten Signal ($S_1$), wobei die Zeitverzögerung (t) durch das Integral

$$L = \int\limits_0^t V_K d\tau$$

über dem korrigierten Geschwindigkeitssignal ($V_K$) unter Berücksichtigung des Abstandes (L) der Meßorte gegeben ist,
- Bildung eines Subtraktionssignals ($S_S = k_1 \cdot S_2 - k_2 \cdot S_0$) aus der Differenz des mit einem Faktor ($k_1$) gewichteten zweiten Signals ($S_2$) und des mit einem Faktor ($k_2$) gewichteten zeitverzögerten Signals ($S_0$) sowie Bildung eines Additionssignals ($S_A = k_3 \cdot S_2 + k_4 \cdot S_0$) aus der Summe des mit einem Faktor ($k_3$) gewichteten zweiten Signals ($S_2$) und des mit einem Faktor ($k_4$) gewichteten zeitverzögerten Signals ($S_0$), wobei die Faktoren ($k_1$ bis $k_4$) reelle Koeffizienten sind, bzw. Bildung von Signalen, die zum Subtraktionssignal ($S_S$) und/oder zum Additionssignal ($S_A$) äquivalent sind,
- Bildung eines Regelsignals ($\Delta S$) aus dem Additionssignal ($S_A$) und dem Subtraktionssignal ($S_S$) bzw. aus daraus abgeleiteten Größen, oder aus dazu äquivalenten Signalen,
- Bildung eines Geschwindigkeitskorrektursignals ($\Delta V$) aus dem Regelsignal ($\Delta S$),
- Bestimmung des korrigierten Geschwindigkeitssignals ($V_K = V_0 + \Delta V$) durch Addition des Geschwindigkeitskorrektursignals ($\Delta V$) zu einem vorgebbaren Geschwindigkeitssignal ($V_0$).

2. Verfahren nach Anspruch 1, mit folgendem Merkmal:

- Bildung der ersten zeitlichen Ableitung ($\frac{d}{dt}$) des Additionssignals ($S_A$) oder Bildung eines zur ersten zeitlichen Ableitung ($\frac{d}{dt}$) des Additionssignals ($S_A$) äquivalenten Signals,
- Bildung eines Regelsignals

$$\left(\Delta S = \left(\frac{d}{dt} S_A\right) \cdot S_S\right)$$

durch Multiplikation des nach der Zeit abgeleiteten Additionssignals ($\frac{d}{dt} S_A$) bzw. eines dazu äquivalenten Signals mit dem Subtraktionssignal ($S_S$).

3. Verfahren nach Anspruch 1, mit folgendem Merkmal:

- Das vorgebbare Geschwindigkeitssignal ($V_0$) wird zu Beginn des Verfahrens gleich Null gesetzt.

4. Verfahren nach Anspruch 1, mit folgendem Merkmal:

- Das vorgebbare Geschwindigkeitssignal ($V_0$) wird zu Beginn des Verfahrens als Schätzwert ungleich Null vorgegeben.

5. Verfahren nach Anspruch 1, mit folgendem Merkmal:

- Das vorgebbare Geschwindigkeitssignal ($V_0$) ist zu einem vorgebbaren Zeitpunkt bekannt.

6. Verfahren nach Anspruch 1, mit folgendem Merkmal:

- Das vorgebbare Geschwindigkeitssignal ($V_0$) wird laufend zur Verfügung gestellt.

7. Verfahren nach Anspruch 1, mit folgendem Merkmal:

- Das Subtraktionssignal ($S_S$) wird vor Bildung des Regelsignals ($\Delta S$) gefiltert.

8. Verfahren nach Anspruch 1 oder 7, mit folgendem Merkmal:

- Das Additionssignal ($S_S$) wird vor Bildung des Regelsignals ($\Delta S$) gefiltert.

9. Verfahren nach Anspruch 2, mit folgendem Merkmal:

- Die zeitliche Ableitung des Additionssignals ($S_A$) bzw. ein zu dieser zeitlichen Ableitung äquivalentes Signal wird vor der multiplikativen Verknüpfung mit dem Subtraktionssignal ($S_S$) bzw. mit einem dazu äquivalenten Signal einer Vorzeichenauswertung (sgn) unterzogen.

10. Verfahren nach Anspruch 1, mit folgendem Merkmal:

- Die Bildung des Geschwindigkeitskorrektursignals ($\Delta V$) ist durch einen vorgebbaren Grenzwert begrenzt.

11. Verfahren nach Anspruch 10, mit folgendem Merkmal:

- Der vorgebbare Grenzwert ist abhängig vom vorgebbaren Geschwindigkeitssignal ($V_0$).

**12.** Verfahren nach Anspruch 1, mit folgendem Merkmal:

- Das korrigierte Geschwindigkeitssignal $(V_K)$ wird einer Neigungsregelung für den Wagenkasten zugeführt.

**13.** Verfahren nach Anspruch 1, mit folgendem Merkmal:

- Das korrigierte Geschwindigkeitssignal $(V_K)$ wird einer Traktionssteuerung und/oder einer Bremssteuerung für das spurgeführte Fahrzeug zugeführt.

**14.** Vorrichtung zur näherungsweisen Geschwindigkeitsbestimmung bei einem spurgeführten Fahrzeug mit mindestens einem Wagen (1, 2, 3), dessen Wagenkasten (11, 21, 31) auf Fahrwerken (12, 13, 22, 23, 32, 33) mit mindestens einem Radpaar sitzt, wobei die Vorrichtung folgende Merkmale umfaßt:

- Mindestens eine Meßeinrichtung (14, 24) mit wenigstens einem ersten Sensor (15) zur Messung wenigstens eines ersten Signals $(S_1)$ und mit wenigstens einem zweiten Sensor (25) zur Messung wenigstens eines zweiten Signals $(S_2)$, wobei die Signale $(S_1, S_2)$ identische geometrische Eigenschaften der Gleisstrecke zumindest näherungsweise beschreiben und die wenigstens zwei Sensoren (15, 25) an wenigstens zwei relativ zueinander beweglichen und im Abstand (L) voneinander entfernten Meßorten im oder am Fahrzeug (1, 2) angeordnet sind,
- mindestens ein Zeitverzögerungsglied (40) zur Bildung eines zeitverzögerten Signals $(S_0)$ aus dem ersten Signal $(S_1)$, wobei die Zeitverzögerung (t) durch das Integral

$$L = \int_{o}^{t} V_K d\tau$$

über dem korrigierten Geschwindigkeitssignal $(V_K)$ unter Berücksichtigung des Abstandes (L) der Meßorte gegeben ist,
- mindestens ein Subtrahierer (41) zur Bildung eines Subtraktionssignals $(S_S = k_1 \cdot S_2 - k_2 \cdot S_0)$ aus der Differenz des mit einem Faktor $(k_1)$ gewichteten zweiten Signals $(S_2)$ und des mit einem Faktor $(k_2)$ gewichteten zeitverzögerten Signals $(S_0)$ sowie mindestens einen Addierer (42) zur Bildung eines Additionssignals $(S_A = k_3 \cdot S_2 + k_4 \cdot S_0)$ aus der Summe des mit einem Faktor $(k_3)$ gewichteten

zweiten Signals $(S_2)$ und des mit einem Faktor $(k_4)$ gewichteten zeitverzögerten Signals $(S_0)$, wobei die Faktoren $(k_1$ bis $k_4)$ reelle Koeffizienten sind, bzw. Bildung von Signalen, die zum Subtraktionssignal $(S_S)$ und/oder zum Additionssignal $(S_A)$ äquivalent sind,
- wenigstens eine Recheneinheit (47) zur Bildung eines Regelsignals $(\Delta S)$ aus dem Additionssignal $(S_A)$ und dem Subtraktionssignal $(S_S)$ bzw. aus daraus abgeleiteten Größen, oder aus dazu äquivalenten Signalen,
- wenigstens eine Regeleinrichtung (48) zur Bildung eines Geschwindigkeitskorrektursignals $(\Delta V)$ aus dem Regelsignal $(\Delta S)$,
- wenigstens ein Addierer (50) zur Bestimmung des korrigierten Geschwindigkeitssignals $(V_K = V_0 + \Delta V)$ durch Addition des Geschwindigkeitskorrektursignals $(\Delta V)$ zu einem vorgebbaren Geschwindigkeitssignal $(V_0)$.

**15.** Vorrichtung nach Anspruch 14, mit folgenden Merkmalen:

- Wenigstens einen Differenzierer (45) zur Bildung der ersten zeitlichen Ableitung $(\frac{d}{dt})$ des Additionssignals $(S_A)$ oder zur Bildung eines zur ersten zeitlichen Ableitung $(\frac{d}{dt})$ des Additionssignals $(S_A)$ äquivalenten Signals,
- die Recheneinheit (47) ist als Multiplizierer ausgeführt und dient zur Bildung eines Regelsignals

$$(\Delta S = (\frac{d}{dt} S_A) \cdot S_S)$$

durch Multiplikation des nach der Zeit abgeleiteten Additionssignals $(\frac{d}{dt} S_A)$ bzw. eines dazu äquivalenten Signals mit dem Subtraktionssignal $(S_S)$.

**16.** Vorrichtung nach Anspruch 14, mit folgendem Merkmal:

- Wenigstens ein Filter (43), dem das Subtraktionssignal $(S_S)$ vor Bildung des Regelsignals $(\Delta S)$ zugeführt wird.

**17.** Vorrichtung nach Anspruch 14, mit folgendem Merkmal:

- Wenigstens ein Filter (44), dem das Additionssignal $(S_A)$ vor seiner Differenzierung zugeführt wird.

**18.** Vorrichtung nach Anspruch 14, mit folgendem Merkmal:

- Wenigstens ein Begrenzungselement (49) zur Begrenzung des Geschwindigkeitskorrektursignals ($\Delta V$).

19. Vorrichtung nach Anspruch 14, mit folgendem Merkmal:

- Mindestens ein Ausgang, über den das korrigierte Geschwindigkeitssignal ($V_K$) einer Neigungsregelung und/oder Traktionssteuerung und/oder Bremssteuerung zuführbar ist.

FIG 1

EP 0 943 921 A1

FIG 2

FIG 3

FIG 4

FIG 5

$$\Delta S = \text{sgn}\left\{\left(\frac{d}{dt} S_A\right)\right\} \cdot S_S$$

FIG 6

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | FR 2 632 411 A (DURAND CHARLES ;DURAND JEROME (FR)) 8. Dezember 1989 * Seite 7, Absatz 1 - Seite 7, Absatz 3; Ansprüche 1,3,4 * --- | 1-19 | G01P3/80 G01P3/50 G06G7/19 |
| Y | MESCH F: "SPEED AND FLOW MEASUREMENT BY AN INTELLIGENT CORRELATION SYSTEM" ADVANCES IN INSTRUMENTATION AND CONTROL, Bd. 45, Nr. PART 04, 1. Januar 1990, Seiten 1899-1914, XP000172126 * Seite 1899, Absatz 1 - Seite 1901, Absatz 8; Abbildungen 1-3 * --- | 1,2,7-19 | |
| Y | DE 21 33 942 A (LICENTIA GMBH) 18. Januar 1973 * Seite 4 - Seite 5; Ansprüche 1-5 * --- | 1-19 | |
| A | EP 0 582 112 A (SCHLAFHORST & CO W) 9. Februar 1994 * Zusammenfassung * ----- | 1-6 | |
| | | | **RECHERCHIERTE SACHGEBIETE (Int.Cl.6)** G01P G06G |

Der vorliegende Recherchenbericht wurde für alle Patentansprüche erstellt

| Recherchenort | Abschlußdatum der Recherche | Prüfer |
|---|---|---|
| MÜNCHEN | 23. Juni 1999 | Felicetti, C |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 10 4592

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-06-1999

| Im Recherchenbericht angeführtes Patentdokument | | Datum der Veröffentlichung | Mitglied(er) der Patentfamilie | | Datum der Veröffentlichung |
|---|---|---|---|---|---|
| FR 2632411 | A | 08-12-1989 | WO | 8912234 A | 14-12-1989 |
| DE 2133942 | A | 18-01-1973 | AT | 377098 B | 11-02-1985 |
| | | | AT | 564572 A | 15-06-1984 |
| | | | BE | 785777 A | 03-11-1972 |
| | | | NL | 7209135 A,B, | 04-01-1973 |
| EP 0582112 | A | 09-02-1994 | DE | 4225842 A | 10-02-1994 |
| | | | DE | 59307420 D | 30-10-1997 |
| | | | JP | 6186242 A | 08-07-1994 |

EPO FORM P0461

Für nähere Einzelheiten zu diesem Anhang : siehe Amtsblatt des Europäischen Patentamts, Nr.12/82